# EUROPEAN PATENT APPLICATION

(11) **EP 3 637 267 A1**
(43) Date of publication of application: **15.04.2020**
(21) Application number: 18813983.6
(22) Date of filing: 01.03.2018
(51) Int. Cl.: G06F 13/00, A63F 13/30, A63F 13/85, G06Q 50/00

(54) **INFORMATION PROCESSING DEVICE, INFORMATION PROCESSING METHOD, AND PROGRAM**

(30) Priority: 08.06.2017 JP 2017113488
(71) Applicant: Sony Corporation, Tokyo 108-0075 (JP)
(72) Inventor: MIYAJIMA, Yasushi, Tokyo 105-0014 (JP)
(74) Representative: MFG Patentanwälte Meyer-Wildhagen Meggle-Freund Gerhard PartG mbB
(86) International application number: PCT/JP2018/007854
(87) International publication number: WO 2018/225313

(57) **Abstract**

[Object] To provide an information processor, an information processing method, and a program that make it possible to provide interaction with characters not only in a game but also outside the game. [Solution] An information processor that performs control to notify a user of a message from a game character involved with the user in a game, through a community service on the basis of registered community service access information of the user.

## Description

### Technical Field

The present disclosure relates to an information processor, an information processing method, and a program.

### Background Art

There has been known games (so-called social-network games) that make it possible for users to receive game services from game servers by coupling information processing terminals to the Internet, and that makes it possible for the users who play the same game via the Internet to interact with each other by using their own characters.

Here, with regard to a game management device, for example, PTL 1 listed below discloses a technology of strengthening a connection between users also in a game in accordance with a level of interaction between the users in a community service.

### Citation List

### Patent Literature

PTL 1: Japanese Unexamined Patent Application Publication No. 2015-8836

### Summary of the Invention

### Problem to be Solved by the Invention

However, an existing technology as described above is for applying interactions between people in community services to progress in games, and interaction with computer-controlled characters in a game takes place only in the game.

Therefore, the present disclosure proposes an information processor, an information processing method, and a program that make it possible to provide interaction with characters not only in a game but also outside the game.

### Means for Solving the Problem

According to the present disclosure, there is proposed an information processor that performs control to notify a user of a message from a game character involved with the user in a game, through a community service on the basis of registered community service access information of the user.

According to the present disclosure, there is proposed an information processing method including causing a processor to perform control to notify a user of a message from a game character involved with the user in a game, through a community service on the basis of registered community service access information of the user.

According to the present disclosure, there is proposed a program that causes a computer to serve as a controller that performs control to notify a user of a message from a game character involved with the user in a game, through a community service on the basis of registered community service access information of the user.

### Effects of the Invention

As described above, the present disclosure makes it possible to provide interaction with characters not only in a game bur also outside the game.

It is to be noted that the above-described effects are not necessarily limitative. In addition to or in place of the above effects, there may be achieved any of the effects described in the present specification or other effects that may be grasped from the present specification.

### Brief Description of the Drawings

[FIG. 1] FIG. 1 illustrates an overview of an information processing system according to an embodiment of the present disclosure.
[FIG. 2] FIG. 2 is a block diagram illustrating an example of a configuration of a user terminal according to the present embodiment.
[FIG. 3] FIG. 3 is a block diagram illustrating an example of a configuration of a game server according to the present embodiment.
[FIG. 4] FIG. 4 illustrates an example of a data configuration of an event information DB according to the present embodiment.
[FIG. 5] FIG. 5 is a flowchart illustrating SNS friend request processing performed by a game character according to a first embodiment.
[FIG. 6] FIG. 6 illustrates an example of a screen of a friend request from a game character according to the first embodiment.
[FIG. 7] FIG. 7 is a flowchart illustrating message transmission processing in an SNS according to the first embodiment.
[FIG. 8] FIG. 8 illustrates an example of a screen of a personalized message in an SNS according to the first embodiment.
[FIG. 9] FIG. 9 illustrates an example of a screen of messages posted on an SNS timeline according to the first embodiment.
[FIG. 10] FIG. 10 is a flowchart illustrating event occurrence control processing according to the first embodiment.
[FIG. 11] FIG. 11 illustrates messages posted on an SNS by game-level-based groups according to a second embodiment.
[FIG. 12] FIG. 12 is a block diagram illustrating an example of a configuration of an SNS server according to the second embodiment.
[FIG. 13] FIG. 13 is a flowchart illustrating group-associating processing according to the second embodiment.
[FIG. 14] FIG. 14 is a flowchart illustrating processing of posting a message on a timeline according to the second embodiment.

### Modes for Carrying Out the Invention

Description is given below in detail of preferred embodiments of the present disclosure with reference to attached drawings. It is to be noted that, in the present specification and drawings, repeated description is omitted for components substantially having the same functional configuration by assigning the same reference numerals.

Further, description is given in the following order.
1. Overview of Information Processing System according to Embodiment of Present Disclosure
2. Configuration
   2-1. Configuration of User Terminal 1
   2-2. Configuration of Game Server 2
3. Embodiments
   3-1. First Embodiment
      (3-1-1. SNS Friend Request Processing)
      (3-1-2. Message Transmission Processing in SNS)
      (3-1-3. Event Occurrence Control)
   3-2. Second Embodiment
      (3-2-1. Configuration of SNS server 3)
      (3-2-2. Group-Associating Processing)
4. Conclusion

### «1. Overview of Information Processing System according to Embodiment of Present Disclosure»

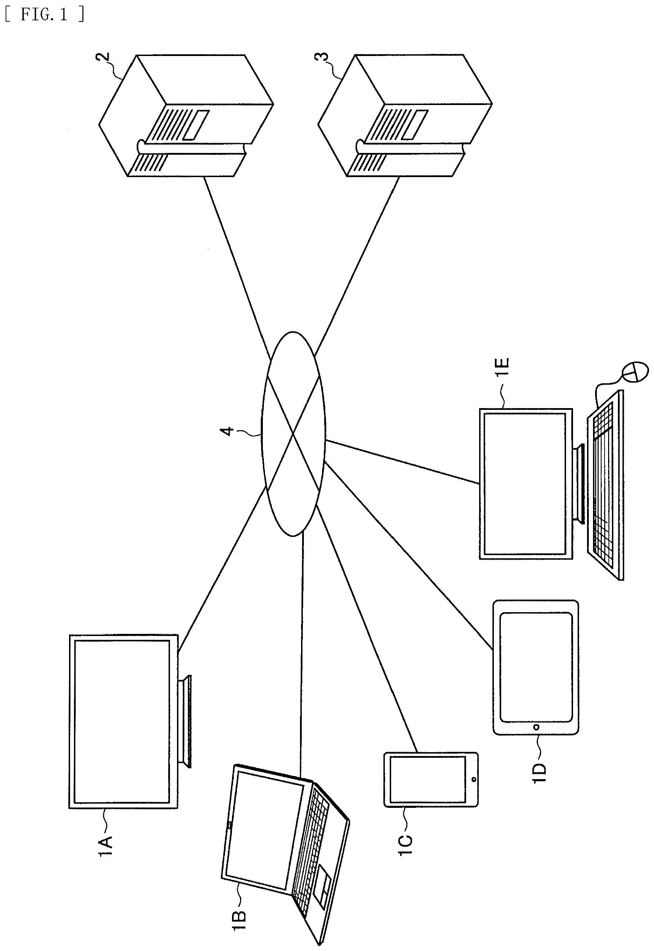

FIG. 1 illustrates an overview of an information processing system according to an embodiment of the present disclosure. As illustrated in FIG. 1, in the information processing system according to the present embodiment, user terminals 1 (1A to 1E), a game server 2, and an SNS server 3 are coupled to one another via a network 4.

The user terminals 1 are information processing terminals used by users. The user terminals 1 make it possible to receive game services by coupling to the game server 2, and to receive community services by coupling to the SNS server 3. Specifically, for example, the user terminal 1 outputs a game screen and game sound on the basis of information received from the game server 2. In addition, the user terminal 1 outputs a message screen, a bulletin board screen, a chat screen, or the like on the basis of information received from the SNS server 3. In addition, for example, as illustrated in FIG. 1, the user terminal 1 may be implemented by a television, a notebook personal computer (PC), a smartphone, a tablet terminal, a desktop PC, or the like.

The game server 2 controls progress in a game, and presents a game service to users. In addition, the game server 2 according to the present embodiment makes it possible to generate messages (a text, an image, sound, or the like) from computer-controlled characters (e.g., characters who have appeared on a game screen and met a user in the game) with which the user has been involved in the game, and to notify the user in the community service via the SNS server 3.

The SNS server 3 is a processing server that provides a social networking service (SNS), which is an example of the community service. In the present embodiment, the community service is a service that transfers text information, image information, sound information, or the like via the network 4, and allows people to have connections to each other.

As described above, the information processing system according to the present embodiment notifies of messages from game characters in the community service that allows people to have connections to each other. This makes it possible for the game characters to behave as if they were truly present not only in a game world but also in a real world, thus making it possible to entertain users more.

The information processing system according to the present embodiment of the present disclosure has been described above. Next, with reference to drawings, specific configurations of respective devices included in the information processing system according to the present embodiment are described.

### «2. Configuration»

### <2-1. Configuration of User Terminal 1>

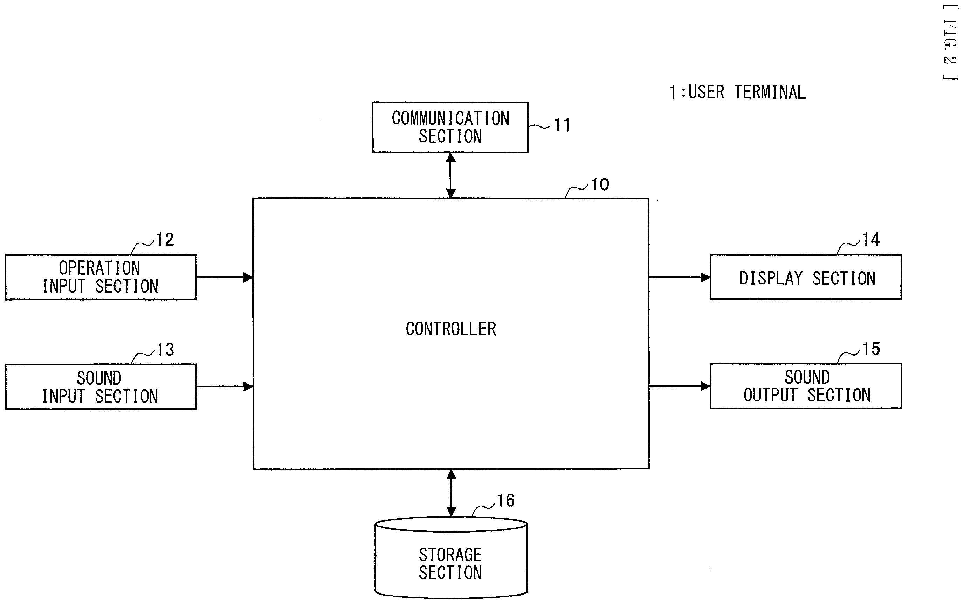

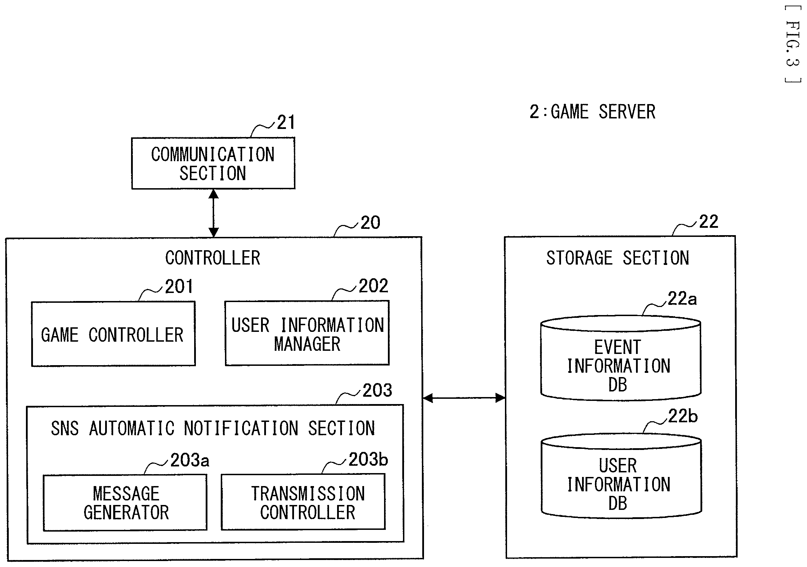

FIG. 2 is a block diagram illustrating an example of a configuration of the user terminal 1 according to the present embodiment. As illustrated in FIG. 3, the user terminal 1 includes a controller 10, a communication section 11, an operation input section 12, a sound input section 13, a display section 14, a sound output section 15, and a storage section 16.

The controller 10 serves as an arithmetic processor and a control device, and controls overall operations in the user terminal 1 in accordance with various kinds of programs. The controller 10 is implemented by an electronic circuit such as a central processing unit (CPU) and a microprocessor, for example. In addition, the controller 10 may include a read only memory (ROM) and a random access memory (RAM). The read only memory (ROM) stores programs, arithmetic parameters, and the like to be used. The random access memory (RAM) temporarily stores parameters varying as appropriate, and the like.

In addition, the controller 10 according to the present embodiment performs control to display a game screen on the display section 14, and performs control to output game sound out of the sound output section 15 on the basis of information received from the game server 2 via a communication section 21. In addition, the controller 10 performs control to display a message screen or a chat screen on the display section 14 on the basis of information received from the SNS server 3 via the communication section 21. In addition, the controller 10 performs control to transmit operation input information inputted from the operation input section 12 in accordance with user operation, from the communication section 11 to the game server 2 or the SNS server 3.

The communication section 11 is coupled to the network 4 by wire or wirelessly, and transmits and receives data to and from the game server 2 and the SNS server 3 on the network. The communication section 11 is coupled to the network 4 for communication via, for example, a wired/wireless local area network (LAN), Wi-Fi (registered trademark), a portable communication network (Long-Term Evolution (LTE), or third-generation mobile communication system (3G)), or the like.

The operation input section 12 receives an operation instruction from a user, and outputs contents of the operation to the controller 10. The operation input section 12 may be a touch sensor, a pressure sensor, or a proximity sensor. Alternatively, the operation input section 12 may be a physical configuration such as a button, a switch, or a lever.

The sound input section 13 is implemented by a microphone, a microphone amplifier, and an A/D converter. The microphone amplifier performs amplification processing on a sound signal obtained through the microphone. The A/D converter performs digital conversion on the sound signal. The sound input section 13 outputs the sound signal to the controller 10.

The display section 14 is a display device that outputs various kinds of operation screens, menu screens, game screens, message screens, chat screens, and the like. The display section 14 may be a display device such as a liquid crystal display (LCD) or an organic electro luminescence (EL) display, for example.

The sound output section 15 includes a speaker that reproduces the sound signal, and an amplifier circuit corresponding to the speaker.

The storage section 16 is implemented by a read only memory (ROM) and a random access memory (RAM). The read only memory (ROM) stores programs, arithmetic parameters, and the like to be used in the processing performed by the controller 10. The random access memory (RAM) temporarily stores parameters varying as appropriate, and the like.

The configuration of the user terminal 1 according to the present embodiment have been specifically described above. It is to be noted that, the configuration illustrated in FIG. 2 is a mere example. The configuration of the user terminal 1 is not limited thereto.

### <2-2. Configuration of Game Server 2>

FIG. 3 is a block diagram illustrating an example of a configuration of the game server 2 according to the present embodiment. As illustrated in FIG. 3, the game server 2 includes a controller 20, a communication section 21, and a storage section 22.

### (Controller 20)

The controller 20 serves as an arithmetic processor and a control device, and controls overall operations in the game server 2 in accordance with various kinds of programs. The controller 20 is implemented by an electronic circuit such as a central processing unit (CPU) and a microprocessor, for example. In addition, the controller 20 may include a read only memory (ROM) and a random access memory (RAM). The read only memory (ROM) stores programs, arithmetic parameters, and the like to be used. The random access memory (RAM) temporarily stores parameters varying as appropriate, and the like.

In addition, the controller 20 according to the present embodiment also serves as a game controller 201, a user information manager 202, and an SNS automatic notification section 203.

The game controller 201 controls an overall game system. Specifically, the game controller 201 controls progress in a game. For example, the game controller 201 acquires event information from an event information DB 22a, determines which event to be caused to occur, and controls evens that occur in the game such as controlling starts of the events. In addition, the game controller 201 associates respective users with characters in the game. Association information may be stored as status information in a user information DB 22b.

In addition, the game controller 201 according to the present embodiment controls characters (so-called non-player characters) that are not operated by users, and determines whether or not users have met a predetermined character in the game (specifically, whether or not the specific character has appeared in the game, for example). In a case where a user has met the predetermined character, the game controller 201 notifies the SNS automatic notification section 203 that the user has met the predetermined character.

The user information manager 202 manages user information in cooperation with the user information DB 22b. Specifically, for example, the user information manager 202 manages user IDs, player names, login date and time, event completion date and time, status information such as items and game progress statuses, SNS access information of users, and information regarding presence/absence of SNS-related events. The SNS access information is a user address in an SNS, which is an example of an out-of-game community service. The SNS access information is used when a message is transmitted from a character in the game to a user on the SNS through the SNS automatic notification section 203 described later. In addition, the information regarding presence/absence of SNS-related events is registered in a case where the SNS automatic notification section 203 notifies the user of a game event to be held, on the SNS.

The SNS automatic notification section 203 performs control to send messages from characters in the game to users on the SNS. Specifically, in a case where the SNS automatic notification section 203 notifies that a user has met a predetermined character in a game, the SNS automatic notification section 203 sends a message from the predetermined character to the user on the SNS, which is an out-of-game communication service. Accordingly, in the present embodiment, this makes it possible to provide interaction with characters in the game even outside the game as if the characters in the game were truly present. It is to be noted that, in a case where the user has not yet had an SNS connection with the predetermined character whom the user has met in the game, the SNS automatic notification section 203 performs control to refer to the user's SNS access information registered in the user information DB 22b and to send a friend request from the predetermined character to the user on the SNS.

In addition, as illustrated in FIG. 3, the SNS automatic notification section 203 according to the present embodiment also serves as a message generator 203a and a transmission controller 203b. The message generator 203a generates messages that are posted on SNSs from characters in games to users. Generation of the messages to be generated is not limited to personalized messages, but includes messages to be posted on an SNS and available to users registered as friends. In addition, examples of contents of the message to be generated include an announcement of an event that is now held or an event that is to be held soon. In a case where the user on the SNS is notified of a game event that is to be held, the SNS automatic notification section 203 registers "presence" of an SNS-related event on the user information DB 22b. Further, it is also possible for the message generator 203a to analyze (such as morphological analysis, semantic analysis, and extraction of keywords) a reply from the user on the SNS or a comment from the user for a posted message, and to generate a reply message from a character.

The transmission controller 203b performs control to transmit the message generated by the message generator 203a from the communication section 21 to the SNS server 3.

### (Communication Section 21)

The communication section 21 is coupled to the network 4 by wire or wirelessly, and transmits and receives data to and from the respective user terminals 1 and the SNS server 3 via the network 4. The communication section 21 is coupled to the network 4 for communication via, for example, a wired/wireless local area network (LAN), Wireless Fidelity (Wi-Fi) (registered trademark), or the like.

### (Storage Section 22)

The storage section 22 is implemented by ROM and RAM. The ROM stores programs, arithmetic parameters, and the like to be used in the processing performed by the controller 20. The RAM temporarily stores parameters varying as appropriate, and the like. In addition, the storage section 22 according to the present embodiment stores the event information DB 22a and the user information DB 22b.

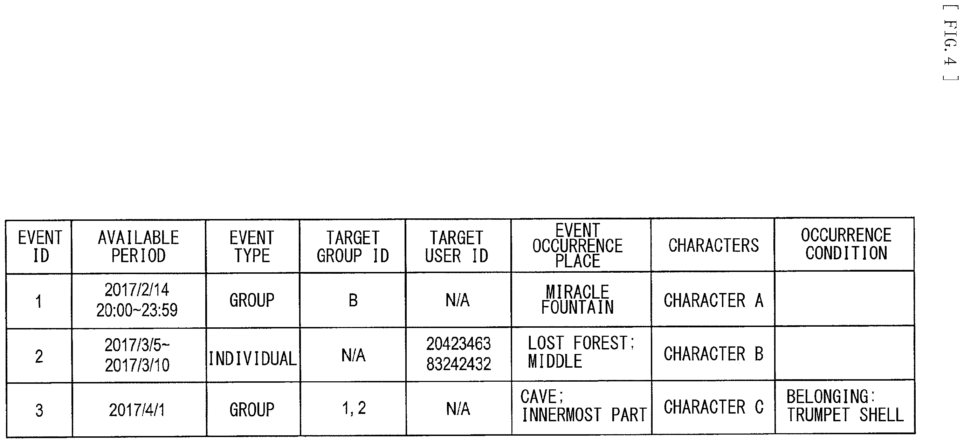

The event information DB 22a stores information regarding events that occur in the game in association with event IDs. Here, FIG. 4 illustrates an example of a data configuration of the event information DB 22a.

As illustrated in FIG. 4, an event available period, an event type, a target group ID, a target user ID, an event occurrence place, characters, and an occurrence condition are stored in the data configuration of the event information DB 22a for each event ID.

The "event ID" is a unique number for identifying an event. The "available period" is a period in which the event occurs. The "event type" includes a group type and an individual type. The group type means an event targeted for all game users or a specific game user group (e.g., a group of users with a specific level (also referred to as a game level), which is set in the game). For example, an announcement message of a group type event is posted on a timeline available for the target group. Further, the individual type means an event targeted for an individual. An announcement message of an individual type event is transmitted to an individual user (so-called direct message).

The "target group ID" is an ID of a group that is targeted when the event type indicates the group type. A plurality of target group IDs may be present. In addition, the "target user ID" is an ID of a user who is targeted when the event type indicates the individual type. A plurality of target user IDs may be present.

The "event occurrence place" designates a place in the game where an event occurs. In a case of designating a narrow range in a wide area, coordinates may be specifically designated in a map of the game. The "characters" are each a predetermined character who appears in the event (a game character who is a program-controlled character and corresponds to an SNS in which a message is transmitted when the character meets a user; hereinafter, also referred to as an SNS-corresponding character). With regard to designation of predetermined characters, the example illustrated FIG. 4 explicitly illustrates character names for easy understanding. However, in practice, characters are designated by character IDs.

The "occurrence condition" is a condition for causing an event to occur, in addition to date, time, and a place. For example, specific belongings (items in the game) may be designated. It is to be noted that, in a case of a complex condition (such as defeat of a monster that appears when touching a specific object at a specific place, for example), it is difficult to write the condition into the event information DB 22a. Therefore, a separate event processing program may be prepared to write the condition as a processing procedure.

The user information DB 22b stores login information of each user, status information such as items and game progress statuses, SNS access information associated with users, presence/absence of SNS-related events (in a case where occurrence of the event is announced in an SNS, there is "presence" of the SNS-related event, and association is performed with an ID of the event to be caused to occur), and the like.

The configuration of the game server 2 according to the present embodiment (an example of the information processor) has been specifically described above. It is to be noted that, the configuration of the game server 2 illustrated in FIG. 3 is a mere example. The present embodiment is not limited thereto. For example, at least a portion of the structural elements of the game server 2 may be in an external device, and at least a portion of the functions of the controller 20 may be implemented by the user terminal 1 or an information processing terminal (e.g., a so-called edge server) having a relatively close communication distance to the user terminal 1. The game server 2 may be configured to allow at least one of or a portion of, for example, game control, user information management, or SNS automatic notification to be performed by the user terminal 1 or an information processing terminal having a closer communication distance to the user terminal 1 than the game server 2. As described above, appropriate distribution of respective structural elements of the game server 2 makes it possible to improve real-timeliness, reduce processing load, and ensure security. Alternatively, all the structural elements of the controller 20 and all the DBs illustrated in FIG. 3 may be provided in the user terminal 1, and the information processing system according to the present embodiment may be executed by applications of the user terminal 1.

### «3. Embodiments»

Next, with reference to drawings, operation processing of the information processing system according to the present embodiment is specifically described.

### <3-1. First Embodiment>

### (3-1-1. SNS Friend Request Processing)

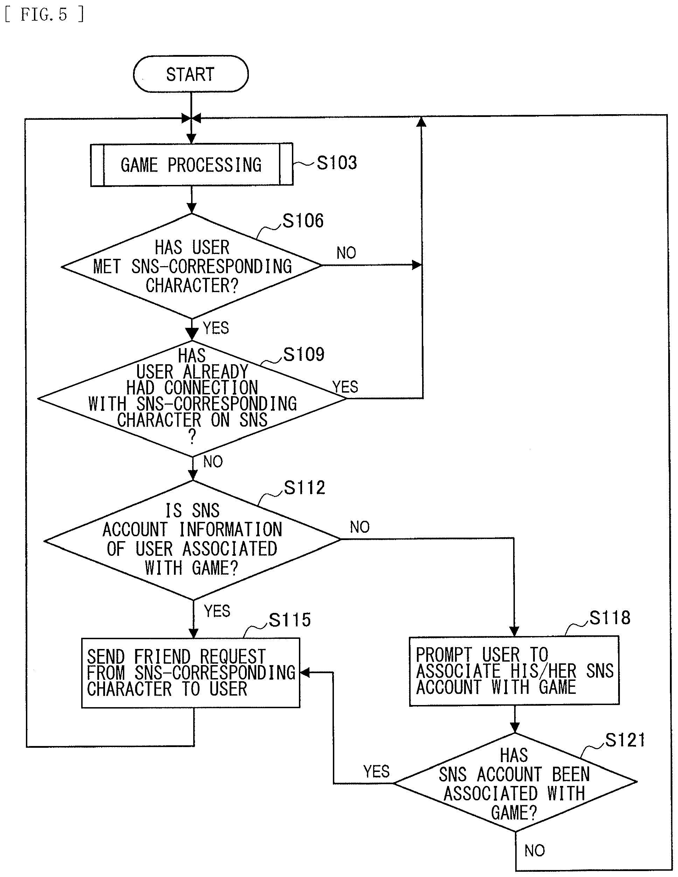

First, with reference to FIG. 5, SNS friend request processing performed by a game character is described. FIG. 5 is a flowchart illustrating the SNS friend request processing performed by a game character according to the present embodiment.

As illustrated in FIG. 5, while game processing (control of progress in a game such as presentation of a game screen to a user, occurrence of an event in the game, presentation of items, and the like) is being performed (Step S103), the game controller 201 of the game server 2 first determines whether or not the user has met an SNS-corresponding character in the game (Step S106). The SNS-corresponding character is a predetermined character who may send messages on a preset SNS, out of program-controlled non-player characters.

Next, in a case where the user has met the SNS-corresponding character (Step S106/ Yes), the SNS automatic notification section 203 determines whether or not the user already has a connection with the SNS-corresponding character on the SNS (specifically, whether or not the SNS-corresponding character is registered as a friend) (Step S109). Friend registration information may be acquired from the SNS server 3, or may be referred to the user information DB 22b.

Next, in a case where the user does not have a connection with the SNS-corresponding character (Step S109/No), the SNS automatic notification section 203 determines whether or not SNS account information of the user is associated with the game (Step S112). The SNS account information of the user may be registered in the user information DB 22b.

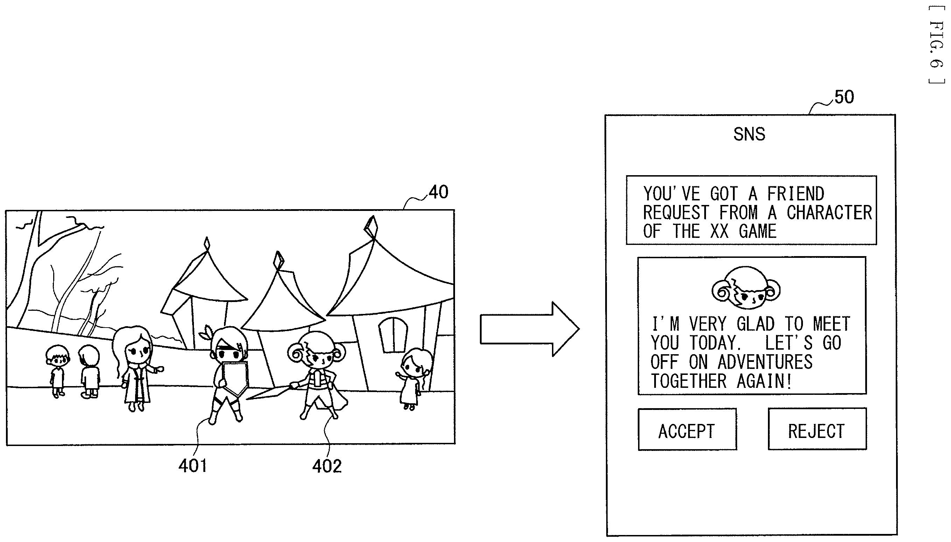

Next, in a case where the SNS account information is associated with the game (Step S112/Yes), the SNS automatic notification section 203 instructs the SNS server 3 to send a friend request from the SNS-corresponding character to the user (Step S115). Here, FIG. 6 illustrates an example of a screen of a friend request from a game character. For example, in a case where a character 401 operated by the user meets an SNS-corresponding character 402 in a game as illustrated in a game screen 40 on left side of FIG. 6, the user is notified of a friend request from the character whom the user has met in the game, on an SNS, together with a message such as "I'm very glad to meet you today. Let's go off on adventures together again!", as illustrated in an SNS screen 50 on right side of FIG. 6. In this case, an explanation indicating in which scene of which game the user has met the character, an icon of the character, an image of the scene where the user has met the character, or the like may be provided. As described above, by getting contacted by game characters through the out-of-game communication service, it is possible to arrange the game characters as if they were truly present, thus making it possible to entertain users more. In a case of accepting the friend request, the user taps an accept button. In a case of rejecting the friend request, the user taps a reject button.

Alternatively, in a case where the SNS account information is not associated with the game (Step S112/No), the game controller 201 prompts the user to associate his/her SNS account with the game (Step S118). The user may be prompted to associate his/her SNS account with the game through a notification in the game (such as a pop-up notification, a general information message from a management in the game, for example), or through an e-mail, etc. It is to be noted that, to prevent the user from being overstressed, the number of times of the prompting notification may be limited.

Next, in a case where the SNS account information is associated with the game by the user (Step S121/Yes), the game controller 201 instructs the SNS server 3 to send a friend request from the SNS-corresponding character to the user as described above (Step S115).

### (3-1-2. Message Transmission Processing in SNS)

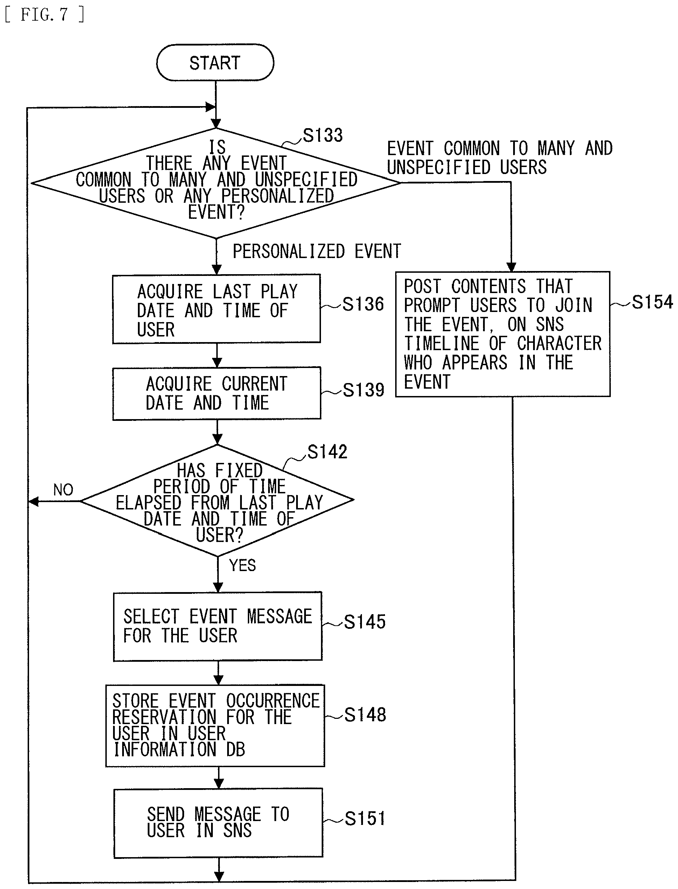

Next, with reference to FIG. 7, processing of transmitting the message from the SNS-corresponding character via the SNS is described. FIG. 7 is a flowchart illustrating the message transmission processing in an SNS according to the present embodiment. Here, a case where an event announcement message is transmitted from an SNS-corresponding character on an SNS is described as an example.

As illustrated in FIG. 7, the SNS automatic notification section 203 of the game server 2 first refers to the event information DB 22a and determines whether or not there is an event common to many and unspecified users or a personalized event (Step S133). Specifically, the SNS automatic notification section 203 may refer to the event information registered in the event information DB 22a, and make a determination on the basis of an event available period, an event type, and a target group ID or a target user ID. For example, in a case where an event that targets all game users is now held or will be held soon (such as after predetermined days), the SNS automatic notification section 203 determines that there is an event common to many and unspecified users. In addition, in a case where an event that targets an individual user is now held or will be held soon (such as after predetermined days), the SNS automatic notification section 203 determines that there is an event for an individual user. In a case where the present operation processing is performed for each user, the SNS automatic notification section 203 may determine whether or not there is a personalized event that targets each user on the basis of user IDs.

Next, in a case where there is a personalized event (Step S133/Personalized Event), the SNS automatic notification section 203 acquires last play date and time of a target user (Step S136), and acquires current date and time (step S139). The last play date and time of the user may be acquired from the user information DB 22b.

Next, the SNS automatic notification section 203 determines whether or not a fixed period of time has elapsed from the last play date and time of the user (Step S142). It is possible to lower a rate of quitting the game by setting a condition that the event announcement message is transmitted to users who has not played the game for a while. It is to be noted that, in this case, the last play date and time are referred to as an example. However, the present embodiment is not limited thereto. For example, it is possible to make a determination on the basis of play time, an amount of payment, preference information of the user, or the like. For example, in a case where total play time is less than a predetermined threshold, or in a case where a total amount of payment is less than a predetermined threshold, such a user may be set as a transmission target of the event announcement message to generate interest in the game. Alternatively, in a case where an event matches preference of a user, the user may be set as a transmission target of the event announcement message.

Next, in a case where the fixed period of time has elapsed from the last play date and time of the user (in other words, in a case where a transmission condition is satisfied) (Step S142/Yes), the message generator 203a selects an event message for the user (Step S145). Here, as an example, a pre-registered event message is selected and a message is generated. However, the present embodiment is not limited thereto. The message may be generated with reference to the event information or the transmission condition.

Next, an event occurrence reservation for the user is stored in the user information DB 22b (Step S148). Specifically, SNS-related event presence/absence information ("presence" of the SNS-related event) and an event ID are registered in association with the user ID of the user.

Next, the transmission controller 203b performs control to transmit the generated event announcement message to the user in the SNS (Step S151). Specifically, the transmission controller 203b instructs the SNS server 3, via the communication section 21, to transmit the event announcement message to the user. It is to be noted that, such a message is controlled to be transmitted from the SNS-corresponding character registered as a friend of the user. In addition, the SNS automatic notification section 203 may also transmit the message from an SNS-corresponding character who is registered as a friend of the user and who appears in the event. In addition, the SNS automatic notification section 203 according to the present embodiment may perform control to transmit the event announcement message from the SNS-corresponding character to a target who coincides with a transmission condition on the SNS, out of users registered as friends of the SNS-corresponding character who appears in a personalized event that is now held or will be held soon.

Meanwhile, in a case where there is an event common to many and unspecified users (Step S133/Event Common to Many and Unspecified Users), the SNS automatic notification section 203 controls the message generator 203a to generate a message that prompts the users to join the event, and controls the transmission controller 203b to post the generated message on an SNS timeline of a character who appears in the event (Step S154). The message posted on the SNS timeline of the character is available to the many and unspecified users registered as friends of the character.

As described above, in the present embodiment, a message for announcing an event to be held in a game is transmitted from a character in the game to users on an SNS that is an out-of-game community service. This makes it possible to achieve interaction between the game character and users even outside the game, thus making it possible to allow the users to enjoy the game more.

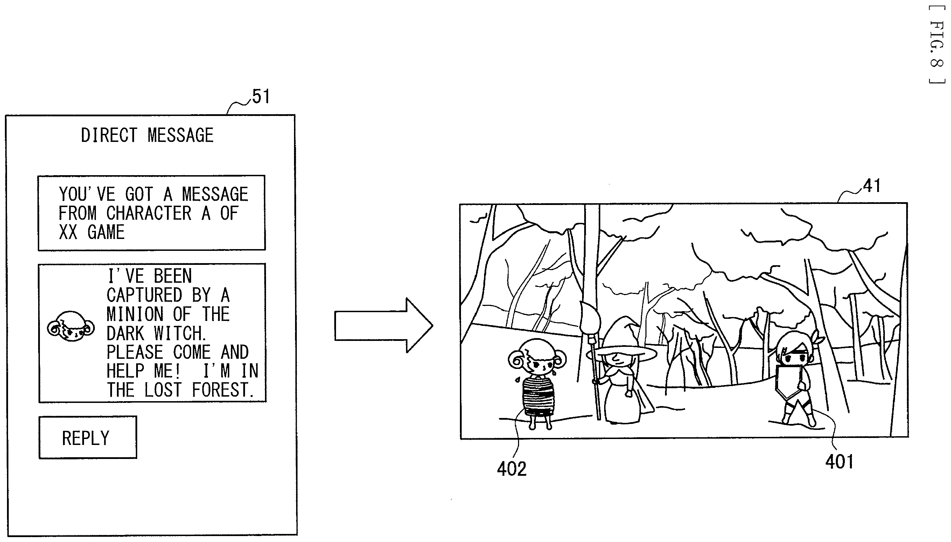

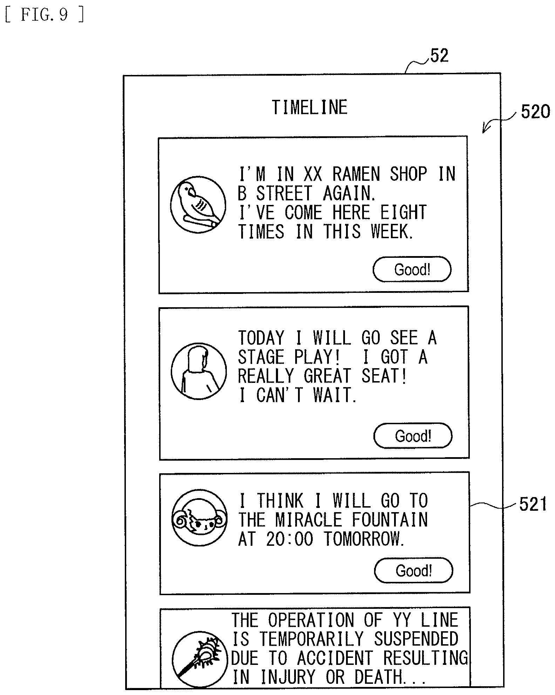

Here, with reference to FIG. 8 and FIG. 9, an example of the event announcement message in the SNS is described.

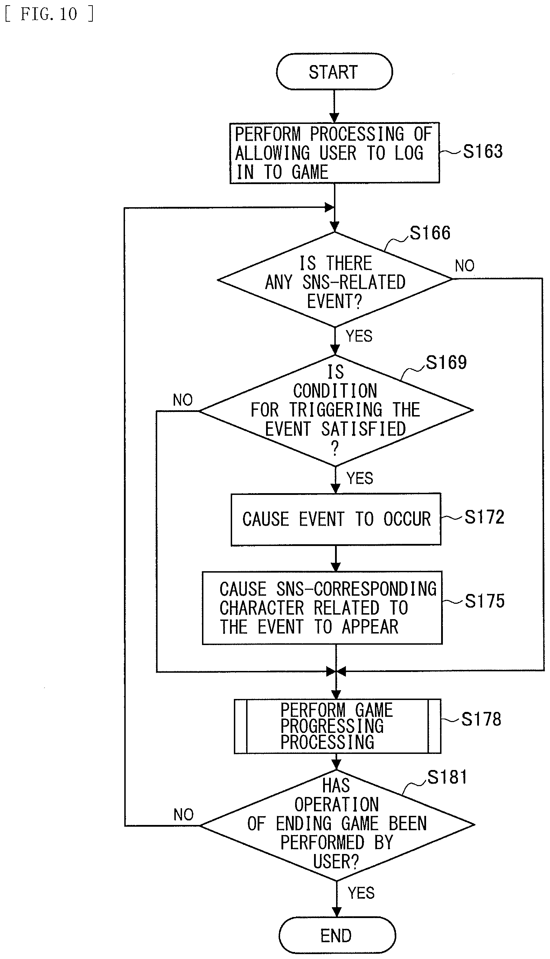

FIG. 8 illustrates an example of a screen of a personalized message in an SNS according to the present embodiment. For example, as illustrated in an SNS screen 51 on left side of FIG. 8, the user is directly presented with behavior of a game character and an event announcement message through the SNS. Such a message also explicitly indicates which character in which game has sent this message. In addition, it is also possible for the user to reply to such a message. Next, when the user arrives at a specific place in the game that has been designated by the message, the character 402 is in the same situation as the situation explicitly indicated in the message, as illustrated in a game screen 41 on right side of FIG. 8, and a predetermined event occurs. It is to be noted that, the character 401 illustrated in the game screen 41 is a character operated by the user. Control of occurrence of the event announced by the message is described later with reference to FIG. 10.

FIG. 9 illustrates an example of a screen of messages posted on an SNS timeline according to the present embodiment. As illustrated in FIG. 9, messages posted by other users who registered as friends of the user are displayed in chronological order in a timeline 520 displayed on an SNS screen 52. An event announcement message 521 posted by the SNS-corresponding character according to the present embodiment may also be displayed in addition to the messages posted by the other users. This makes it possible to display a message as if the character truly existed and posted the message.

### (3-1-3. Event Occurrence Control)

Next, with reference to FIG. 10, control in the game for causing the event of which the announcement message has been transmitted on the SNS to occur is described. FIG. 10 is a flowchart illustrating event occurrence control processing according to the present embodiment.

As illustrated in FIG. 10, the game controller 201 of the game server 2 first performs processing of allowing the user to log in to the game (Step S163).

Next, the game controller 201 refers to the user information DB 22b and checks whether or not there is an SNS-related event associated with the user who has logged in to the game (Step S166). In a case where the event announcement message is transmitted from the game character in the SNS, the announced event is registered as the SNS-related event in the user information DB 22b.

Next, in a case where there is the SNS-related event (Step S166/Yes), the game controller 201 determines whether or not a condition for triggering the event is satisfied (Step S169). The condition for triggering the event is based on, for example, an available period of the event, an event occurrence place, and presence/absence of a predetermined item. It is to be noted that, such a condition for triggering the event is a mere example. For example, a complex condition may be set, such as defeat of a monster that appears after touching a specific object in a predetermined event occurrence place.

Next, in a case where the triggering condition is satisfied (Step S169/Yes), the game controller 201 causes the event to occur (Step S172).

Next, the game controller 201 causes the SNS-corresponding character related to the event to appear in the event (Step SI75).

Next, the game controller 201 performs processing of game progress (Step S178), and repeats the above-described steps S166 to S178 until the user performs operation of ending the game (Step S181).

The event occurrence control according to the present embodiment has been described above. As described above, it is possible to cause the game and the out-of-game community service to cooperate with each other, by causing an event that has been announced in a case where a predetermined condition is satisfied in which, e.g., the user visits a predetermined place in the game in accordance with a message announced via the SNS.

### <3-2. Second Embodiment>

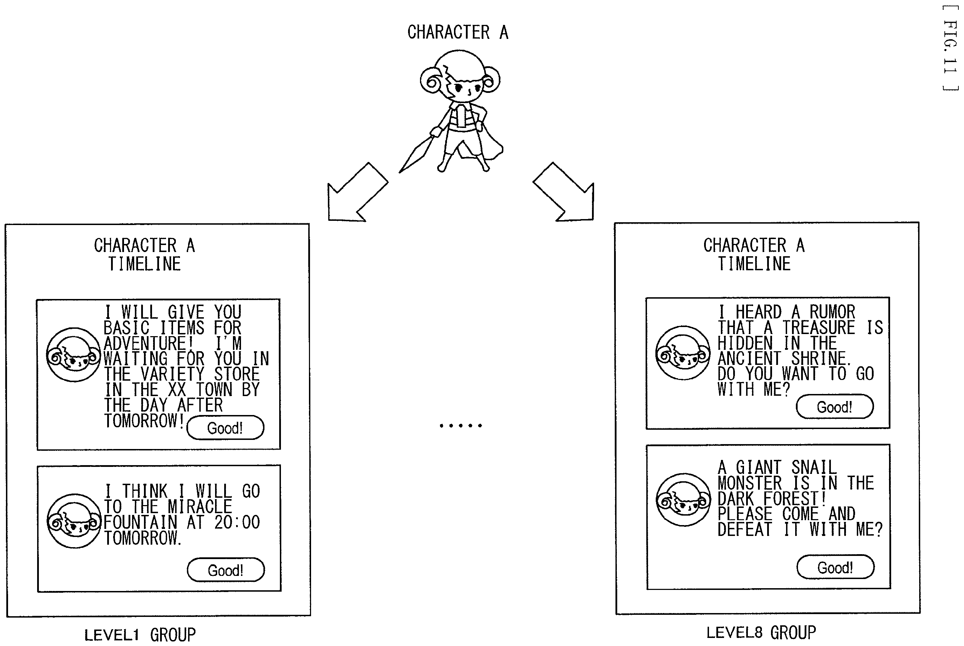

Next, with reference to FIG. 11 to FIG. 14, a second embodiment is specifically described.

In the above-described first embodiment, a message (such as an announcement of an event) is delivered to all users who have a connection with a game character (and who are registered as friends) when the game character posts the message on the timeline. Therefore, it is difficult to individually transmit messages depending on progresses in the game of respective users and levels of the respective users. It is possible to perform the individual transmission by using a so-called direct message, which is used when directly transmitting a message to an individual user. However, unlike the timeline, the direct message is one-to-one communication between a character and a user. Therefore, it is difficult to communicate with other users in a manner that many and unspecified users of the same level read comments from others and reply to them one another as in a case of the timeline. In a case of the timeline, it is possible to view comments from other users for a message such as an announcement of an event posted by a game character. Such communication with many and unspecified users is often one of features of games which entertains users.

Therefore, according to the second embodiment, it is possible to transmit messages to level-based user groups by clustering respective users who have a connection with a game character on an SNS on the basis of their levels in the game, forming groups, and posting messages on virtually multiplexed timelines corresponding to the level-based groups that have been formed. Here, FIG. 11 illustrates messages posted for game-level-based groups on an SNS.

As illustrated in FIG. 11, in the present embodiment, for example, a timeline of a character A who is an example of the SNS-corresponding character is virtually multiplexed for respective level-based user groups, and messages such as announcements of events or giving of items on the basis of levels of corresponding groups are posted on the respective timelines. It is possible for all users belonging to the corresponding group to view the message posted on each timeline. It is also possible to add reply comments to the posted message. In addition, it is possible for users in the same group to view a reply comment written by another user. This makes it possible to allow for communication between the users in the same group (in other words, users of the same game level).

It is to be noted that, in a case where the game level of the user is increased, the user automatically is shifted to a next level group. This makes it possible for the user to view posted messages that match the level of the user while maintaining the connection with the character A.

### (3-2-1. Configuration of SNS server 3)

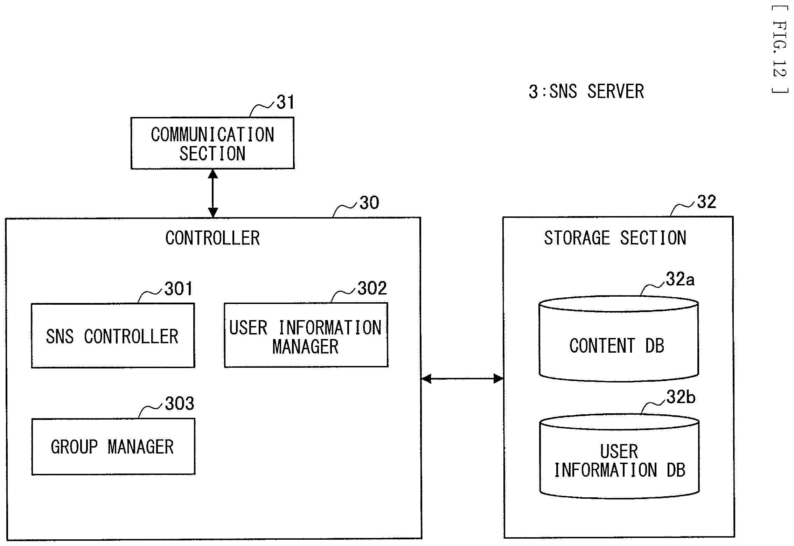

With reference to FIG. 12, a configuration of the SNS server 3 according to the second embodiment, which generates game-level-based groups on the SNS to allow for exchange of messages on a group unit basis, is specifically described.

FIG. 12 is a block diagram illustrating an example of a configuration of the SNS server 3 according to the present embodiment. As illustrated in FIG. 12, the SNS server 3 includes a controller 30, a communication section 31, and a storage section 32.

The controller 30 serves as an arithmetic processor and a control device, and controls overall operations in the SNS server 3 in accordance with various kinds of programs. The controller 30 is implemented by an electronic circuit such as a central processing unit (CPU) or a microprocessor, for example. In addition, the controller 30 may include a read only memory (ROM) and a random access memory (RAM). The read only memory (ROM) stores programs, arithmetic parameters, and the like to be used. The random access memory (RAM) temporarily stores parameters varying as appropriate, and the like.

In addition, the controller 30 according to the present embodiment also serves as an SNS controller 301, a user information manager 302, and a group manager 303.

The SNS controller 301 controls overall general functions of an SNS. In other words, the SNS controller 301 achieves a community service that transfers text information, image information, sound information, or the like.

The user information manager 302 manages the user information in cooperation with a user information DB 32b. Specifically, for example, the user information manager 302 manages user IDs, user profiles, login information, friend registration information, and group information depending on game levels.

The group manager 303 associates users with groups on the basis of game levels of the users. The game levels of the users may be acquired from the game server 2. When the game server 2 notifies of update of a game level, the group manager 303 associates a user with a group on the basis of the updated game level. On the basis of such association, the SNS controller 301 selects from among the virtually multiplexed timelines of a predetermined game character to be displayed for the user.

It is to be noted that, in the present embodiment, users are associated with groups on the basis of game levels. However, the present disclosure is not limited thereto. It is also possible to associate users with groups on the basis of factors other than the levels, such as belongings, amounts of payment, play time, or user preference.

In addition, users may be associated with groups by using the game server 2. In this case, the group manager 303 manages groups of users on the basis of the group information transmitted from the game server 2.

The communication section 31 is coupled to the network 4 by wire or wirelessly, and transmits and receives data to and from the respective user terminals 1 and the game server 2 via the network 4. The communication section 31 is coupled to the network 4 for communication via, for example, a wired/wireless local area network (LAN), Wireless Fidelity (Wi-Fi) (registered trademark), or the like.

The storage section 32 is implemented by ROM and RAM. The ROM stores programs, arithmetic parameters, and the like to be used in the processing performed by the controller 30. The RAM temporarily stores parameters varying as appropriate, and the like. In addition, the storage section 32 according to the present embodiment stores a content DB 32a and the user information DB 32b.

The content DB 32a stores content such as messages and images that are posted on SNSs. It is to be noted that, in a case where a single character has timelines that are virtually multiplexed for respective groups as described above, the content is individually stored for each of the timelines.

The user information DB 32b stores user IDs, user profiles, login information, friend registration information, group information depending on game levels, and the like.

The configuration of the SNS server 3 according to the present embodiment has been specifically described above. It is to be noted that, the configuration of the SNS server 3 illustrated in FIG. 12 is a mere example. The present disclosure is not limited thereto. For example, at least a portion of the structural elements of the SNS server 3 may be provided in an external server (e.g., the game server 2).

### (3-2-2. Group-Associating Processing)

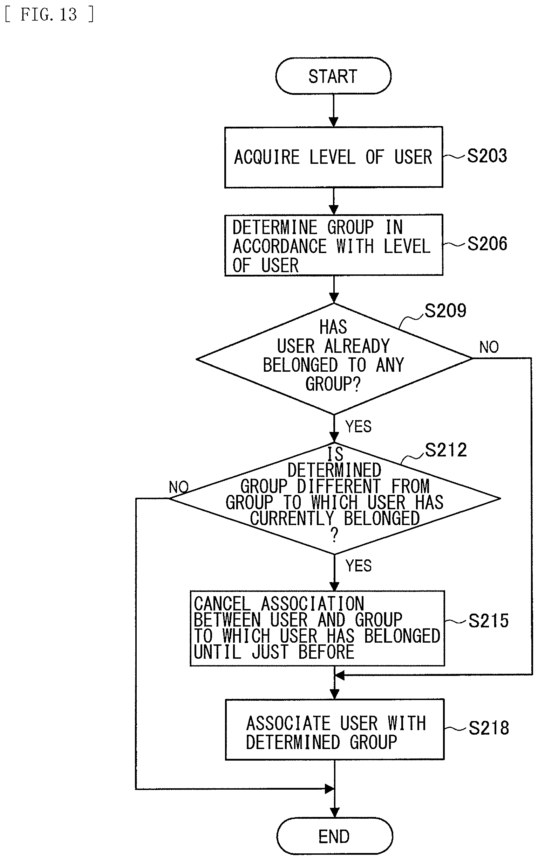

Next, with reference to FIG. 13, group-associating processing according to the second embodiment is described. FIG. 13 is a flowchart illustrating the group-associating processing according to the present embodiment.

As illustrated in FIG. 13, the SNS server 3 first acquires a level (a game level) of a user from the game server 2 (Step S203). The game server 2 may notify the SNS server 3 of the level of the user periodically, or may notify the SNS server 3 of a level of the user when the level of the user is updated.

Next, in accordance with the level of the user, the group manager 303 of the SNS server 3 determines which group the user belongs to on the basis of the level of the user (Step S206). For example, when the user is in level 1, a group including the level 1 is determined.

Next, the group manager 303 refers to group information in the user information DB 32b, and checks whether or not the user has already belonged to the group (Step S209).

Next, in a case where the user has already belonged to any group (Step S209/Yes), the group manager 303 determines whether or not the group to which the user has currently belonged is different from the newly determined group (Step S212).

Next, in a case where the group to which the user has currently belonged is different from the newly determined group (Step S212/Yes), the group manager 303 cancels the association between the user and the group to which the user has belonged until just before (Step S215), and associates the user with the newly determined group (Step S218). Specifically, the group manager 303 updates the user's group information stored in the user information DB 32b to delete the association between the user and the group to which the user has belonged until just before and to associate the user with the newly determined group.

It is to be noted that, in a case where the user has not yet belonged to any group (Step S209/No), the user is associated with the determined group (Step S218).

In addition, in a case where the group to which the user has currently belonged and the newly determined group are the same (Step S212/No), it is not necessary to change the association. Therefore, the group information is not updated.

The group-associating processing according to the present embodiment has been described above. It is to be noted that, such processing may be performed in the game server 2.

### (3-2-3. SNS Posting Processing)

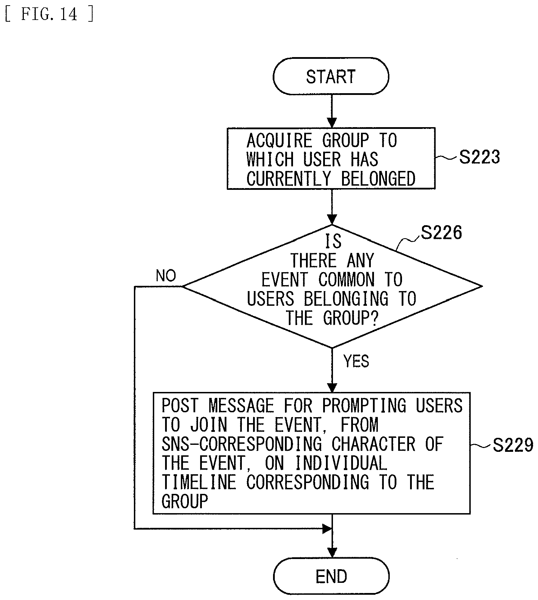

Next, with reference to FIG. 14, processing of posting a message on a timeline corresponding to a level-based group is described. FIG. 14 is a flowchart illustrating the processing of posting a message on a timeline according to the present embodiment.

As illustrated in FIG. 14, the game server 2 first acquires information regarding the group to which the user has currently belonged, from the SNS server 3 (Step S223).

Next, the SNS automatic notification section 203 of the game server 2 refers to the event information DB 22a and determines whether or not there is an event common to users belonging to the group concerned (Step S226). Specifically, as illustrated in FIG. 4, the event information stored in the event information DB 22a includes the target group IDs. Therefore, the SNS automatic notification section 203 refers to the target group ID of the event information, and checks whether or not there is an event that targets the group concerned and that is now held or will be held soon.

Next, in a case where there is the event (Step S226/Yes), the SNS automatic notification section 203 posts a message for prompting the users to join the event, from an SNS-corresponding character who appears in the event, on a timeline corresponding to the group concerned (Step S229). Specifically, the SNS automatic notification section 203 instructs to generate a message that prompts the users to join the event, transmit the generated message from the communication section 21 to the SNS server 3, and post the message on a timeline, of a predetermined SNS-corresponding character, corresponding to the group concerned.

This makes it possible to post a message regarding an event that matches a level of a user on a virtually multiplexed timeline, corresponding to a level-based group, of an SNS-corresponding character, thus making it possible for many users belonging to the same group to view the message.

### «4. Conclusion»

As described above, the information processing system according to the present embodiments of the present disclosure makes it possible to provide interaction with characters in a game even outside the game.

The details of the preferred embodiments of the present disclosure have been described above with reference to the accompanying drawings, whilst the present technology is not limited to such examples. It is obvious that a person having ordinary skill in the art of the present disclosure may find various alterations or modifications within the scope of the technical idea described in the claims, and it should be understood that these alterations and modifications naturally come under the technical scope of the present disclosure.

For example, a computer program for causing hardware, such as a CPU, ROM, and RAM built in the user terminal 1, the game server 2, or the SNS server 3 described above, to exhibit functions of the user terminal 1, the game server 2, or the SNS server 3. Further, a computer-readable storage medium storing the computer program is also provided.

Further, the effects described herein are merely illustrative or exemplary, and are not limitative. That is, the technique according to the present disclosure may achieve, in addition to or in place of the above effects, other effects that are obvious to those skilled in the art from the description of the present specification.

It is to be noted that the present technology may also have the following configurations.
(1) An information processor including
   a controller that performs control to notify a user of a message from a game character involved with the user in a game, through a community service on the basis of registered community service access information of the user.
(2) The information processor according to (1), in which, in a case where the user does not have a connection with the game character in the community service, the controller notifies the user of a message that requests the user to have a connection with the game character in the community service.
(3) The information processor according to (1) or (2), in which the controller notifies the user in the community service by generating a message from the game character and transmitting the generated message to a community server.
(4) The information processor according to (3), in which the controller generates a message regarding an announcement of an event in the game as the message from the game character.
(5) The information processor according to (4), in which the controller generates an announcement message regarding an event in which the game character appears.
(6) The information processor according to (4) or (5), in which the controller generates an announcement message regarding an event for a user who satisfies a predetermined condition.
(7) The information processor according to (6), in which the predetermined condition is based on time elapsed from last play date and time of the game, play time, a level in the game, an amount of payment, or preference information of the user.
(8) The information processor according to any one of (1) to (7), in which the message includes information regarding which character in which game has sent the message.
(9) The information processor according to any one of (1) to (8), in which the controller performs control to generate an announcement message regarding an event for all users and to post the generated announcement message on a timeline of a predetermined game character.
(10) The information processor according to (9), in which the controller performs control to generate an announcement message regarding an event for one or more users belonging to a predetermined group and to post the generated announcement message on a timeline corresponding to the predetermined group, out of multiplexed timelines of the game character.
(11) The information processor according to any one of (1) to (10), in which the game character includes a set game character who is configured to send a message in the community service and who corresponds to a predetermined community service.
(12) An information processing method including causing a processor to perform control to notify a user of a message from a game character involved with the user in a game, through a community service on the basis of registered community service access information of the user.
(13) A program that causes a computer to serve as a controller, the controller performing control to notify a user of a message from a game character involved with the user in a game, through a community service on the basis of registered community service access information of the user.

### [Reference Numerals List]

- 1: user terminal
10 controller
11 communication section
12 operation input section
13 sound input section
14 display section
15 sound output section
16 storage section
- 2: game server
20 controller
201 game controller
202 user information manager
203 automatic notification section
203a message generator
203b transmission controller
21 communication section
22 storage section
22a event information DB
22b user information DB
- 3: SNS server
30 controller
301 controller
302 user information manager
303 group manager
31 communication section
32 storage section
32a content DB
32b user information DB
- 4: network

## Claims

1. An information processor comprising a controller that performs control to notify a user of a message from a game character involved with the user in a game, through a community service on a basis of registered community service access information of the user.

2. The information processor according to claim 1, wherein, in a case where the user does not have a connection with the game character in the community service, the controller notifies the user of a message that requests the user to have a connection with the game character in the community service.

3. The information processor according to claim 1, wherein the controller notifies the user in the community service by generating a message from the game character and transmitting the generated message to a community server.

4. The information processor according to claim 3, wherein the controller generates a message regarding an announcement of an event in the game as the message from the game character.

5. The information processor according to claim 4, wherein the controller generates an announcement message regarding an event in which the game character appears.

6. The information processor according to claim 4, wherein the controller generates an announcement message regarding an event for a user who satisfies a predetermined condition.

7. The information processor according to claim 6, wherein the predetermined condition is based on time elapsed from last play date and time of the game, play time, a level in the game, an amount of payment, or preference information of the user.

8. The information processor according to claim 1, wherein the message includes information regarding which character in which game has sent the message.

9. The information processor according to claim 1, wherein the controller performs control to generate an announcement message regarding an event for all users and to post the generated announcement message on a timeline of a predetermined game character.

10. The information processor according to claim 9, wherein the controller performs control to generate an announcement message regarding an event for one or more users belonging to a predetermined group and to post the generated announcement message on a timeline corresponding to the predetermined group, out of multiplexed timelines of the game character.

11. The information processor according to claim 1, wherein the game character comprises a set game character who is configured to send a message in the community service and who corresponds to a predetermined community service.

12. An information processing method comprising causing a processor to perform control to notify a user of a message from a game character involved with the user in a game, through a community service on a basis of registered community service access information of the user.

13. A program that causes a computer to serve as a controller, the controller performing control to notify a user of a message from a game character involved with the user in a game, through a community service on a basis of registered community service access information of the user.
